Europäisches Patentamt

European Patent Office

Office européen des brevets

(11) Publication number: **0 225 032**
**A1**

## EUROPEAN PATENT APPLICATION

(21) Application number: **86308217.8**

(51) Int. Cl.⁴: **G21C 3/18**

(22) Date of filing: **22.10.86**

(30) Priority: **25.11.85 GB 8528987**
**23.06.86 GB 8615319**

(43) Date of publication of application:
**10.06.87 Bulletin 87/24**

(84) Designated Contracting States:
**DE FR GB**

(71) Applicant: **UNITED KINGDOM ATOMIC**
**ENERGY AUTHORITY**
**11 Charles II Street**
**London SW1Y 4QP(GB)**

(72) Inventor: **Kennedy, Stephan Thomas**
**36 Fulwood Hall Lane Fulwood**
**Preston Lancashire(GB)**
Inventor: **Parry, Paul Ivor**
**23 Dodney Drive Lea**
**Preston Lancashire(GB)**
Inventor: **Robinson, Derek**
**55 The Boulevard Frenchwood**
**Preston Lancashire(GB)**

(74) Representative: **Collingwood, Anthony Robert**
**Patents Branch United Kingdom Atomic**
**Energy Authority 11 Charles II Street**
**London SW1Y 4QP(GB)**

(54) **Nuclear reactor fuel retainer.**

(57) A retainer (20) for restraining axial displacement of the fuel column within a nuclear fuel element is composed of bimetallic strip material and is configured so as to undergo reduction in its major cross-sectional dimension in response to temperature increase. The retainer is initially inserted as an interference fit into the fuel element but becomes freely displaceable by axial expansion of the fuel column when the element is in-reactor.

Fig. 2.

## Nuclear Reactor Fuel Retainer

This invention relates to fuel elements for nuclear reactors.

The invention has particular aplication to the type of fuel element in which a stack of nuclear fuel pellets are contained within a tubular cladding which also provides a plenum space for the accommodation of fission gases released from the pellets during irradiation. The presence of the plenum space in the fuel element creates the problem of ensuring that interpellet gaps do not develop and that the pellet stack remains in the desired position lengthwise of the element. In particular, there is a risk that during handling and shipping of the fuel element prior to installation in the reactor, such interpellet gaps or shifting of the fuel may occur. On the other hand, once the fuel element has been installed in the reactor and is subjected to irradiation, the fuel pellet stack must be allowed to expand.

The present invention seeks to provide a relatively simple and inexpensive form of fuel retainer for nuclear fuel elements which will reliably meet the above-mentioned need.

According to one aspect of the invention there is provided a retainer for insertion in a nuclear fuel element, said retainer comprising a length of bimetallic material formed into an at least part-annular configuration in which a first metal layer having the greater coefficient of thermal expansion is located on the outside of the (part) annulus and a second metal layer having the lesser coefficient of thermal expansion is located on the inside of the -(part) annulus whereby the major cross-sectional dimension of the retainer decreases in response to increase of temperature.

According to a second aspect of the invention there is provided a fuel element for a nuclear reactor comprising a tubular sheath, a column of nuclear fuel enclosed within the sheath and a retainer located at or adjacent one end of the fuel column by frictional engagement with an inner surface of the sheath, the frictional engagement reducing with increase in temperature whereby, prior to irradiation, the retainer by virtue of said frictional engagement is effective to restrain axial displacement of the fuel column but, on irradiation of the element within the reactor, the reduced frictional engagement renders the retainer ineffective to prevent axial expansion of the fuel column.

According to a further aspect of the invention there is provided a fuel element for a nuclear reactor comprising a tubular sheath, a column of nuclear fuel enclosed within the sheath and a bimetallic retainer inserted into the sheath to restrain axial movement of the fuel column prior to irradiation, the retainer being received in the sheath as an interference fit to provide the axial restraint and being configured so that the bimetallic characteristic thereof results in reduction of the major cross-sectional dimension of the retainer in response to increase of temperature whereby the restraint then offered by the retainer is insufficient to restrain fuel column expansion under irradiation conditions

The retainer may be generally C-shaped with an axial slot and an axially extending bent-in portion, the bent-in portion conveniently having flat sides which diverge as they extend outwards from an inner region of the device, as viewed axially. The flat sides may extend outwards from a central axis.

The retainer may be shaped to engage the inner surface of the sheath at a plurality of angularly spaced locations. For example the diameter of the C-shaped device may be slightly less than the diameter of the inner surface of the sheath so that the device engages the inner surface at the edges of the slot and at the junctions between the angularly spaced outer ends of the bent-in portion.

The retainer may alternatively be a helix formed from flat strip with the metal layer of lesser thermal expansion on the inside and the metal layer of greater thermal expansion on the outside.

At one end the helical retainer may have a diametral part for engagement with one end of the fuel column.

The invention may be performed in various ways and two specific embodiments with possible modifications will now be described by way of example with reference to the accompanying drawings, in which:

Figure 1 is a diagrammatic view of a fuel element;

Figure 2 is a perspective view of one form of fuel column retainer;

Figure 3 is an end view on a different scale of the retainer of Figure 2;

Figure 4 is an end view of another form of retainer;

Figure 5 is section through an insertion bush for the retainer;

Figure 6 is a side view of another, presently preferred, form of retainer;

Figure 7 is an end view, as seen from the left hand end in Figure 6;

Figure 8 is a cross-sectional view adjacent the left hand end of the retainer; and

Figure 9 is a plan view of the strip from which the retainer of Figures 6-8 is formed.

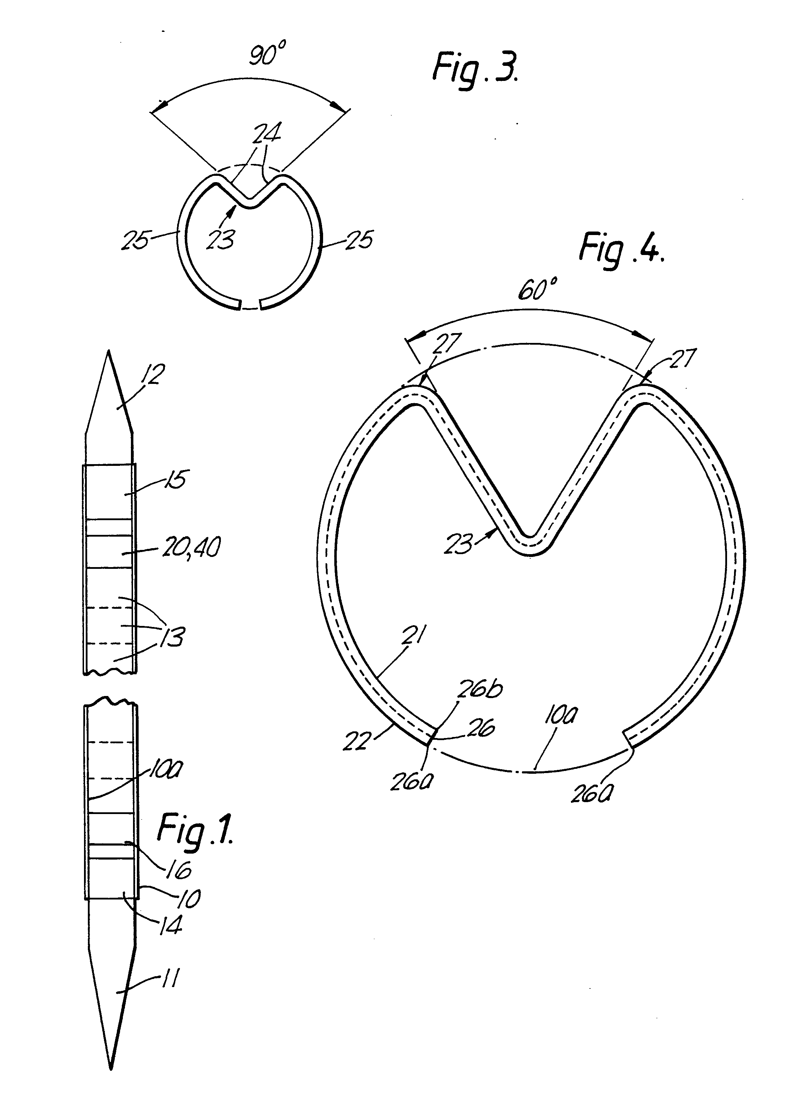

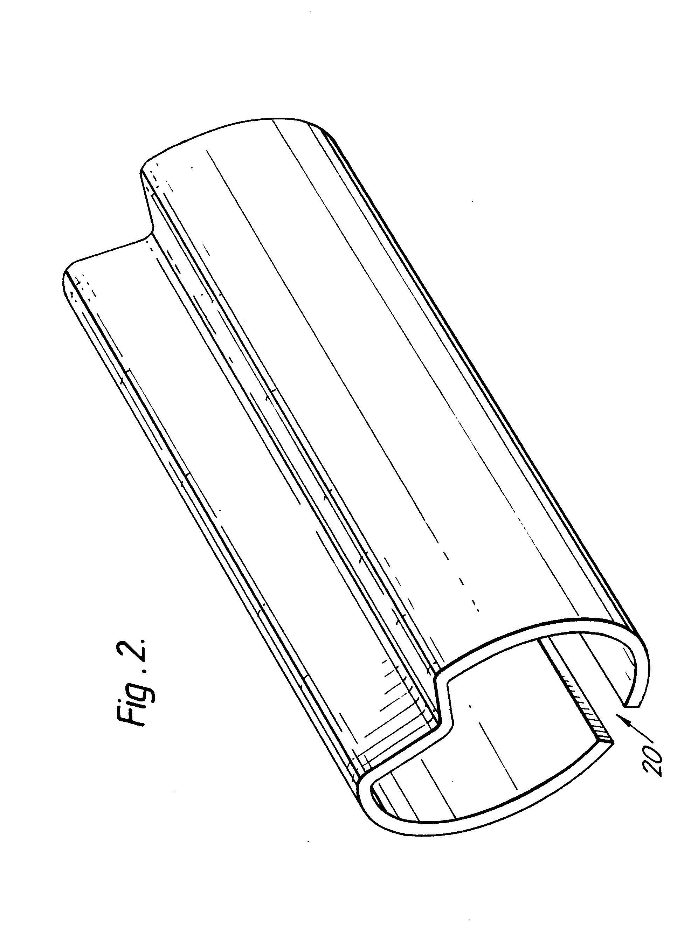

A fuel pin for a fast nuclear reactor comprises in general terms a tubular sheath or can 10 (Figure 1) provided with end fittings 11, 12 which seal the ends of the tube. In the tube is a stack or column of fuel pellets 13 and at the ends of the stack are plenums 14, 15 for accommodation of fission products. The bottom end of the fuel column is supported by a fixed platform 16 incorporating a mesh material to allow passage of fission gases into the lower plenum space 14.

It is desirable to restrain the stack before making the final weld in securing the upper end fitting 11 in order to avoid fissile contamination of the weld and obscuring of the X-ray image of the weld during inspection of the weld. During subsequent transport and handling of the completed pin assembly, restraint on the stack is also desirable and there is a need to avoid inter-pellet gaps so that for example testing equipment will not misread a gap as indicating a chipped or otherwise misshapen pellet.

Figures 2-4 show one form of retainer 20 for restraining a stack of fuel pellets in a fuel can. The pellets are inserted sequentially into the top of the tube 10, after the bottom fitting 11 has been attached, and are carefully arranged so as to have no inter-pellet gaps. The retainer 20 is then inserted to engage the top pellet, and finally the top end fitting 12 is welded on.

The retainer 20 is held in place by frictional engagement with the inner surface 10a of the can 10. When the can is loaded into the reactor, the rise in temperature causes the transverse dimension of the retainer 20 to reduce so that the pellet stack 13 can expand upwardly in the axial direction.

The retainer 20 as shown is formed from a strip of bimetallic material having inner and outer layers 21, 22 (Fig 4), the layer 22 having a greater coefficient of thermal expansion than the inner layer 21. The strip is bent to form a generally circular C-shape and is provided with an axial bent-in portion 23 of V-section having sides 24 which may, for example, include an angle of 90° (Fig 3) or 60° - (Fig 4). The retainer 20 has side portions 25 extending between free edges 26 and the junctions 27 with the outer ends of the sides 24 of portion 23. The outer diameter of portions 25 is slightly greater than the internal diameter of the can 10, so that the retainer 20 engages the surface 10a at four angularly spaced locations (viewed axially) ie junctions 27 and the outer edges 26a of edges 26.

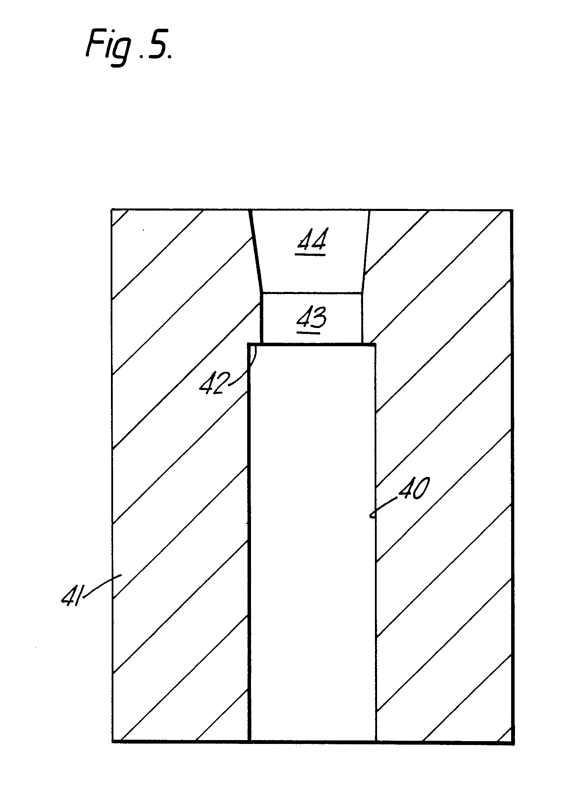

Figure 5 illustrates how the retainer 20 can be inserted into the can 10. An upper end part of the can 10, into which can the stack 13 has been inserted, is inserted into bore 40 in body 41 with the end of tube 10 abutting shoulder 42 at an end of reduced-diameter bore 43 leading to slightly diverging bore 44.

The retainer 20 is initially placed in bore 44 and urged axially into bore 32 and then displaced axially through the bore 43 which causes it to contract radially so as to be freely insertable into the can. Thereafter the retainer expands laterally into engagement with surface 10a and can then be moved axially to abut the top face of the stack 13. The can 10 is then removed from the bore 40 and the top fitting 12 is secured in place.

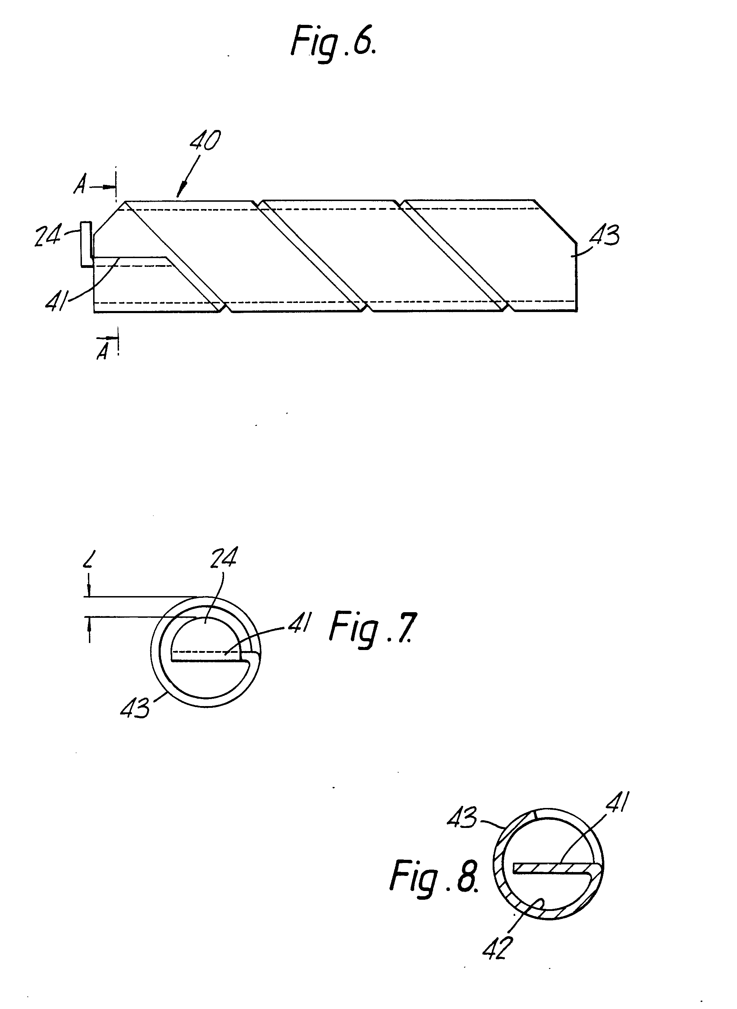

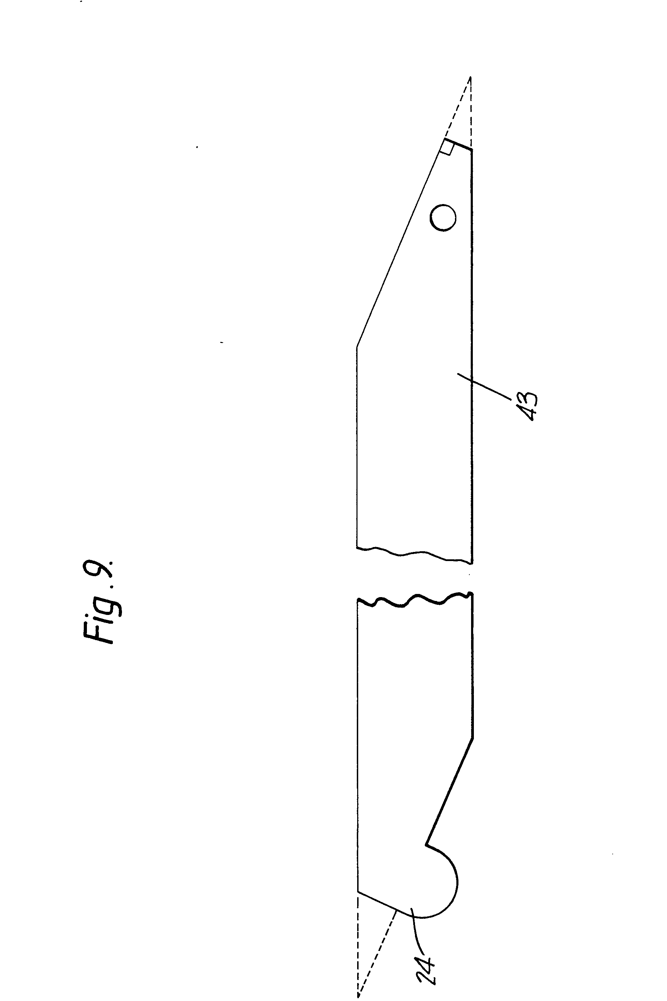

Referring now to Figures 6-9, the retainer 40 is formed from flat bi-metallic strip wound into a helix with an end portion 41 at one end bent in to lie on a diameter. The metal of lesser thermal expansion is on the inner side 42 of the helix and the metal of greater thermal expansion is on the outer side 43 of the helix.

A suitable material for the strip is that sold under the brand name Telcon 140 made by Telcon Metals Limited of Crawley, England.

The retainer 40 is inserted into the can 10 so that its convolutions frictionally engage the inside surface 10a of the can. When the fuel element is loaded into the reactor and the reactor is operational, the rise in temperature causes the transverse dimension of the retainer 40 to reduce so that the retainer no longer restrains the fuel column but can be displaced to allow the column to expand axially, ie when the temperature rises the helix contracts radially and offers substantially no resistance to axial movement of the stack. The retainer includes a fuel engagement platform 24 extending transversely at one end which can engage the stack end.

Because the device 40 is formed as a helix, insertion into the can is facilitated by using a rotary action whilst effecting insertion, the sense of the rotation being such as to cause the radius of the helix to reduce if frictional resistance to insertion or rotation is encountered.

The retainer is inserted with the end nearer part 41 leading, using an elongate tool which is inserted along and within the helix and having a transverse slot which receives part 41 so as to enable the tool, and thus the helix, to be rotated. An elongate tool which tightly grips part 41 can be used to withdraw the retainer (with a rotary and axial movement) before the final end cap is fitted if the pin fails to meet design specification.

Any tendency for the stack to move axially after the retainer 40 has been inserted but before temperature rise has caused a reduction in the diameter of the retainer, subjects the retainer to an axial force which will have the effect of tending to expand the helix thus increasing the frictional engagement with the can and increasing the resistance provided by the retainer to axial movement of the stack. After a substantial temperature rise has taken place however, the retainer 40 will have contracted to such an extent that it is substantially freely displaceable within the column in response to stack expansion

## Claims

1. A retainer for insertion in a nuclear fuel element, said retainer comprising a length of bi-metallic material formed into an at least part-annular configuration in which a first metal layer having the greater coefficient of thermal expansion is located on the outside of the (part) annulus and a second metal layer having the lesser coefficient of thermal expansion is located on the inside of the -(part) annulus whereby the major cross-sectional dimension of the retainer decreases in response to increase of temperature.

2. A fuel element for a nuclear reactor comprising a tubular sheath, a column of nuclear fuel enclosed within the sheath and a retainer located at or adjacent one end of the fuel column by frictional engagement with an inner surface of the sheath, the frictional engagement reducing with increase in temperature whereby, prior to irradiation, the retainer by virtue of said frictional engagement is effective to restrain axial displacement of the fuel column but, on irradiation of the element within the reactor, the reduced frictional engagement renders the retainer ineffective to prevent axial expansion of the fuel column.

3. A fuel element for a nuclear reactor comprising a tubular sheath, a column of nuclear fuel enclosed within the sheath and a bimetallic retainer inserted into the sheath to restrain axial movement of the fuel column prior to irradiation, the retainer being received in the sheath as an interference fit to provide the axial restraint and being configured so that the bimetallic characteristic thereof results in reduction of the major cross-sectional dimension of the retainer in response to increase of temperature whereby the restraint then offered by the retainer is insufficient to restrain fuel column expansion under irradiation conditions.

4. A fuel element as claimed in Claim 2 or 3 in which the retainer comprises a length of bimetallic material formed into an at least part-annular configuration in which a first metal layer having the greater coefficient of thermal expansion is located on the outside of the (part) annulus and a second metal layer having the lesser coefficient of thermal expansion is located on the inside of the (part) annulus.

5. A retainer or fuel element as claimed in Claim 1, 2, 3 or 4 in which the bimetallic material is in strip form and is bent about axes extending generally transversely of the strip length and in the plane of the strip.

6. A retainer or fuel element as claimed in any one of Claims 1 to 5 in which the retainer is generally C-shaped.

7. A retainer or fuel element as claimed in Claim 6 in which the C-shaped retainer is formed with an axial flute at a position intermediate its ends.

8. A retainer or fuel element as claimed in any one of Claims 1 to 5 in which the retainer is of helical configuration.

9. A retainer or fuel element as claimed in Claim 8 in which the helix terminates in a portion which extends generally diametrically of the helix for engagement with one end of the fuel column.

10. A retainer or fuel element as claimed in Claim 8 or 9 in which the helix is wound from bimetallic strip material with the metal layer of greater thermal expansion coefficient on the outside of the helix and the metal layer of lesser thermal expansion coefficient on the inside of the helix, the convolutions of the helix being spaced from one another to allow the helix to be axially compressed and thereby expand radially.

Fig. 3.

Fig. 4.

Fig. 2.

20

## Fig .5.

# Fig.6.

# Fig.7.

# Fig.8.

Fig.9.

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | DE-A-1 614 308 (NUKEM)<br><br>* Page 2, lines 1-18; page 3, last paragraph - page 4, first paragraph; figures 3-5,8 *<br><br>--- | 1-6,8, 9 | G 21 C 3/18 |
| A | GB-A-2 122 802 (WESTINGHOUSE)<br>* Page 1, lines 71-108; figure 2 *<br><br>--- | 1-3,8 | |
| A | GB-A-2 100 913 (U.K.A.E.A.)<br>* Page 1, lines 32-48; figures 1,2 *<br><br>----- | 1-3,7 | |

TECHNICAL FIELDS
SEARCHED (Int. Cl.4)

G 21 C 3/00

The present search report has been drawn up for all claims

| Place of search | Date of completion of the search | Examiner |
|---|---|---|
| THE HAGUE | 03-03-1987 | JANDL F. |